# EUROPEAN PATENT SPECIFICATION

(11) **EP 0 371 340 B1**
(45) Date of publication and mention of the grant of the patent: **13.04.1994**
(21) Application number: 89121230.0
(22) Date of filing: 16.11.1989
(51) Int. Cl.: F16H 55/06, C21D 9/32, C23C 8/04

(54) **High strength gear**
Getriebe mit grosser Festigkeit
Denture d'engrenage à haute résistance

(30) Priority: 16.11.1988 JP 290861/88
(43) Date of publication of application: 06.06.1990
(73) Proprietor: NISSAN MOTOR CO., LTD., Yokohama-shi Kanagawa-ken (JP)
(72) Inventor: Fushimi, Shinji, Yokosuka-shi Kanagawa-ken (JP); Nakanishi, Eizaburo, Yokohama-shi Kanagawa-ken (JP); Kawabe, Kunitsugu, Yokosuka-shi Kanagawa-ken (JP); Ogura, Masayoshi, Ebina-shi Kanagawa-ken (JP); Uchiyama, Noriko, Miura-shi Kanagawa-ken (JP)
(74) Representative: Grünecker, Kinkeldey, Stockmair & Schwanhäusser Anwaltssozietät

(56) References cited:
- DE-B- 1 262 731
- DE-C- 569 453
- FR-A- 1 233 454
- FR-A- 2 107 835
- FR-A- 2 334 458
- GB-A- 452 814
- GB-A- 790 890
- GB-A- 951 089
- GB-A- 1 297 016
- US-A- 3 992 763
- US-A- 4 165 243
- MECANIQUE MATERIAUX ELECTRICITE, no. 359, November 1979, Paris, FR; B. PITTION:"Les déformations et les traitements thermiques des engrenages"

## Description

### BACKGROUND OF THE INVENTION

### 1 Technical Field

The present invention relates generally to a method for producing a high strength gear which is suitable for automotive vehicles, fork lift trucks, textile machinery, machine tools, and agricultural machinery, for example.

### 2 Background Art

Usually, gears for applications such as mentioned above are given a surface hardening to improve fatigue properties thereof. For such surface hardening treatments, it is well known in the art that after carburizing (or carbo-nitriding) is applied to case hardening steels, (for example, JIS S20CK, SNC815, ANCM815, SCr420, and SCM420) abnormal surface layers caused by process are typically treated by shot peening to improve their fatigue properties. High-intensity shot peening is applied to steels with an abnormal surface layer with a special steel shot, made of a case hardening steel of a pre-adjusted chemical composition. Austenite, created in the outer most surface layer when a steel is quenched during carbo-nitriding treatment, is retained over several tends percentage of the surface area and shot peening is given thereto at a room temperature, converting surface retained austenite into martensite due to strain transition caused by the stress produced by shot peening (disclosed in "SAE paper" 821102, 1982).

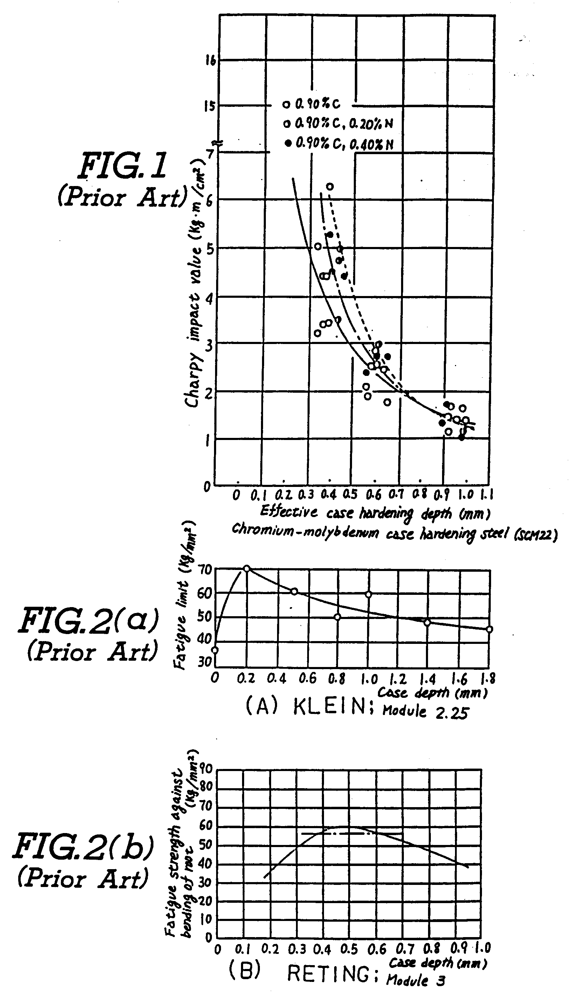

The relationship between the depth of the carburized or carbo-nitrified case (the outer surface of the steel) and impact resistance and fatigue properties which prevent bending at the root of a gear is well known in the art as shown in Figs. 1, 2(a), and 2(b). It will be appreciated that impact strength (a Charpy impact value) becomes greater as the hardened layer becomes closer to the surface and the fatigue strength greatest when the depth of the hardened layer is at a depth of about 0.2 to 0.4 mm (in case of module of 3 through 2.25).

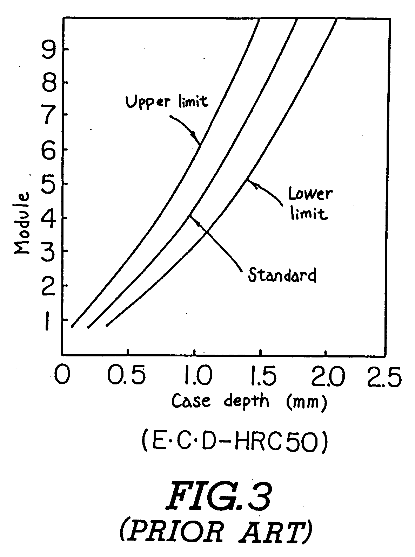

Usually, reference values, recommended by the Gleason Company, and shown in Fig. 3, are used for determining the hardening depth for gear material. These reference standards are well known in the art. When designing gears, the effective hardening depth is determined according to module, in other words, according to the pitch diameter of the gear divided by the number of teeth. Hardness values in this case are determined so as to satisfy that the collapse strength of tooth surfaces can stand against transmission pressure from a counter-part gear, as well as spalling strength and pitting strength requirements. The 'effective' hardening depth is defined as the depth at which a material achieves a hardness of 550Hv usually, an effective hardening depth for a gear having a module of 1 to 2 is 0.6 to 0.8 mm, while an effective hardening depth for a gear having a module of 4 is 0.9 to 1.2 mm. It will be noted that only the depth at which a carburised case achieves a hardness of 550Hv is considered in the art to be the 'effective' hardening depth and, although a carburized layer may reach a certain depth, the effective hardening depth is considered nil unless it attains a hardness value of 550Hv.

It is well known in the art if a gear is given conventional gas-carburizing or gas-carbo-nitriding so that an effective hardening depth D is achieved on the pitch circle the effective hardening depths of bottom lands and rounded portions at the root of the gear tend to be shallower than on the pitch circle (0.8D to 0.9D) because the treatment gas does not flow around those portions well.

An automotive vehicle of today requires high strength gears, especially in the transmission system thereof. These high-strength gears provide great improvement in power performance. It is preferable that high strength gears are designed without increasing the size thereof to prevent the height and weight of the vehicle from increasing. These high strength gears can meet the needs of high performance, miniaturization, and are light weight. Therefore, in carburized gear technology, the development of high strength gears is the most important theme.

However, in gears given the conventional carburizing or carbo-nitriding treatments such as disclosed in DE-C-569 453 or US-A-3 992 763, a practical technique for optimally varying the hardening depths of the tooth surfaces, the bottom land, and the rounded portion at the root of each tooth has not yet been established. If the depth of the carburised or carbo-nitrified case is set to be relatively shallow in view of the fatigue strength necessary to resist bending of the bottom lands and the rounded portions at the root of the gear teeth, then, pitting, due to surface impact of tooth surfaces, and spalling tend to occur, which can cause a gear to break.

Other types of high strength gears are therefore sought, and it is to this end that the present invention is directed.

### SUMMARY OF THE INVENTION

It is an object of the present invention to provide a high strength gear which has improved wear resistance for tooth surfaces as well as improved impact resistance and fatigue properties to guard against the bending of bottom lands and the rounded portions at the root of the gear. High quality is also sought to prevent pitting due to fatigue and spalling from occurring on the tooth surfaces.

According to one aspect of the invention, there is provided a method for producing a high strength gear which comprises the steps of, providing gear material having a given geometry, carburizing or carbo-nitirding the gear material, wherein said carburized or carbo-nitrified gear material is forged at a predetermined forming rate so that the effective hardening depth of bottom land and tooth root portions of said formed gear material is less than 80% of that of the tooth surface of the pitch circle.

According to a further aspect of the invention, there is provided a method for producing a high strength gear which comprises the steps of, providing a gear material having teeth of a given geometry, and carburizing or carbo-nitriding said gear material so as to provide an effective hardening depth to bottom land and root portions of the teeth of said gear material which is less than 80% of that of the tooth surface of the pitch circle, wherein chillers are disposed within the spaces between the teeth formed in the gear material prior to the carburizing or carbo-nitriding step wherein said chillers are manufactured from steel bars which are disposed so as to contact with the bottom land and respective rounded portions of the tooth roots and are fixeddly connected to adjactent chillers.

### BRIEF DESCRIPTION OF THE DRAWINGS

Fig. 1 is a graph which shows a relationship between impact strength and effective hardening depth in a prior art gear.

Figs. 2(a) is a graph which shows a relationship between bending fatigue strength and case depth in a prior art gear.

Fig. 2(b) is a graph which shows a relationship between fatigue strength and hardening depth in a prior art gear.

Fig. 3 is a graph which shows recommended case hardening depths for a gear relative its module.

Fig. 4 is a cross-sectional macro metallographic which shows a tooth portion of a gear which is forged after a round bar of gear material has been carburized.

Fig. 5 is a graph which shows the hardness of the tooth portion of the gear shown in Fig. 1.

Fig. 7(a) is a perspective view which shows a chiller disposed on the bottom lands of gear material.

Figs. 7(b) and 7(c) are view which show the arrangement of the chiller shown in Fig. 7(a).

### DESCRIPTION OF THE PREFERRED EMBODIMENT

The present invention comprises a high strength gear which is given carburizing or carbo-nitriding. This high strength gear is such that the effective hardening depth of the bottom lands and rounded portions of the root of the gear is controlled to a certain value less than eighty percent of the effective hardening depth for tooth surfaces on the gears' pitch circle. This construction has several advantages over the prior art.

Materials for the high strength gear according to the invention may be case hardening steels such as S-CK, SNC, SNCM, SCr, SCM according to JIS (Japanese Industrial Standards) and other steels which include the proper additional alloy content. Methods of carburizing and/or carbo-nitriding are not limited to a particular process. For example, any of the standard processes such as, RX-gas carburizing, gas carbo-nitriding, vacuum carburizing, simple gas carburizing using a solid carburizer or fluidized-bed gas-carburizing may be used. Additionally, the hardness of the carburized case of the gear can be controlled as required, in a manner that, as cementite is precipitated and dispersed on tooth surfaces according to high density carburizing, the amount of precipitation to the bottom lands is controlled, or, cementite is prevented from precipitating to the bottom lands, thereby affecting the relative hardness of each portion of the gear according to the amount of cementite precipitated thereon.

It is preferable that the effective hardening depth of the bottom lands and the rounded portions at the root of the gear is relatively shallow, for example, 0.2 through 0.6 (mm) so as to obtain high fatigue properties thereof. Additionally, the effective hardening depth of the tooth surfaces on the pitch circle should be, for example, 0.6 through 3.0 (mm) so as to have the necessary impact strength required against pressure acting on the tooth surfaces (however, the effective hardening depths of the bottom land and the rounded portion of the root is preferably less than eighty percent of that of the tooth surfaces, that is to say, the 'bottom land or root/tooth surface' hardness ratio is optimally between 0:10 to 7.9:10. If the effective hardening depth of the bottom land and the rounding portion of root of the gear is greater than or equal to eighty percent of the effective hardening depth of the tooth surface at the pitch circle the following problems arise. For example, if the gear were manufactured with a uniformly shallow carburized case in view of the fatigue properties required of the bottom land and the root portion, and the hardness ratio of these portions were eighty percent or greater of the hardness of the tooth portions, the impact and wear resistant properties of the tooth portions would be insufficient, in effect, the gear teeth would be 'too soft' causing the gear to deform and eventually break. Alternatively, were the gear to be made with a relatively deep carburized case in view of the impact and wear and impact resistant properties required of the gear teeth, and again, the hardness ratio of the root and bottom land portions were greater than eighty percent of the hardness of the tooth portion, the fatigue properties required by the root and bottom land portions of the gear would be insufficient as these portions would be 'too hard' to resist fatigue effectively.

Accordingly, the following treatments can provide a high strength gear which has an effective hardening depth at bottom lands and the rounded portions at the root of the gear teeth, these portions being controlled to a certain value less than eighty percent of the effective hardening depth of the tooth surface at the pitch circle (this percentage may include zero percent).

A first method is provided which varys the depth and forming rate for the carburized or carbo-nitrified case of gear material when the material is forged into a gear.

After a round bar of gear material is given typical gas-carburizing (for example, 930°C X 5H) or carbo-nitriding (for example, 870°C X 3H), the round bar is hot or warm forged utilizing the treatment temperature. Subsequently, after the forged gear material is immersed into a neutral salt bath having a quenching temperature of 840°C for example, it is quenched in an oil bath having a temperature of 80°C for example.

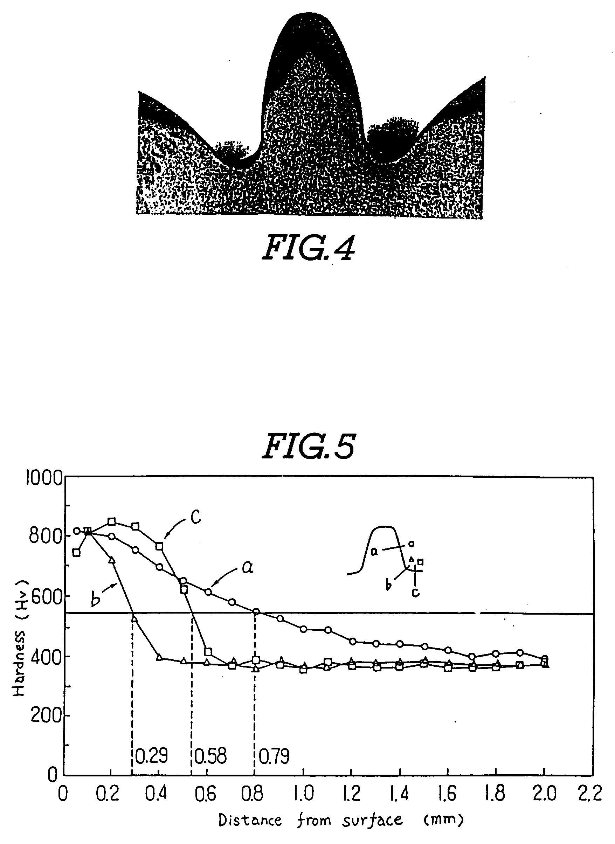

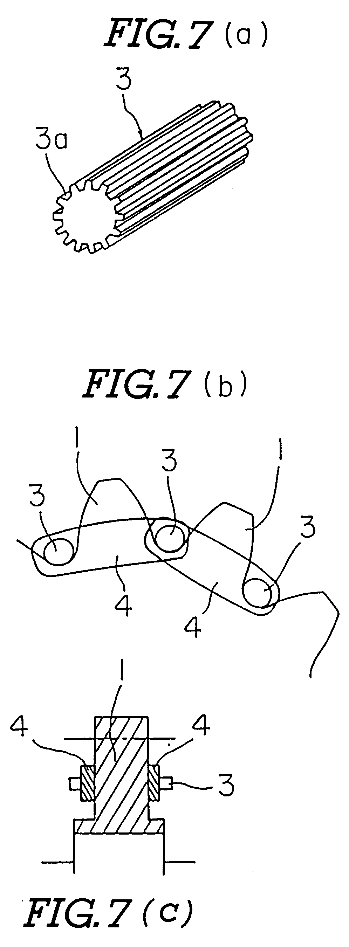

Referring to Fig. 4, a cross-sectional macro metallographic is shown of a gear tooth, including a tooth surface, a bottom land and a rounded portion, to which the above working and quenching was applied. Fig. 5 shows the relationship between the depth of the treated layer for each portion and its hardness, in other words, the hardness distribution of a cross-sectional portion of the tooth. It will be appreciated that the effective hardening depths of a tooth surface on the pitch circle, a bottom land, and a rounding portion of root are 0.79 mm, 0.53 mm (about 67 percent of the effective hardening depth of the tooth surface), and 0.29 mm (about 37 percent of the effective hardening depth of the tooth surface) respectively (in a case where Hv = 550). By varying a depth in the carburized case or the carbo-nitrified case of the round bar material and the forming rate when teeth are forged, the effective hardening depths of the tooth surface on the pitch circle, the bottom land, and the rounding portion of root can be changed.

A second method is provided through the control of the dimensions and geometry of a chiller.

As is well known in the art, a chiller is used for preventing gear material from being carburized. Referring to Fig. 7(a), a chiller of one embodiment of the invention is shown. This chiller 3 has a plurality of grooves 3a on its outer surface, for example, a chiller may be made of bronze, with a groove width of 0.5 mm, and a groove depth of 0.5 mm (alternatively a chiller made in a rod-shape with a plurality of holes bored in the surface thereof may also be used). A plurality of chillers 3 are, as shown in Figs. 7(b) and 7(c), disposed within each tooth space so as to contact with a bottom land and the respective rounded portions of the tooth roots and are fixedly connected to each other by means of linkages 4. Subsequently, carburizing or carbo-nitriding is performed on the gear. According to this method, the dimension of the groove 3a (or bore) affects the effective hardening depth and can be varied by selecting appropriately sized chillers 3 to control the effective hardening depth of the bottom land and the rounding portion of root as desired.

As described above, a gear according to the invention is carburized or carbo-nitrified so as to control the effective hardening depths of bottom lands and rounding portions at root of the gear teeth to a certain value less than eighty percent of the effective hardening depth of a tooth surfaces on the pitch circle thereof. As a result, impact resistance and fatigue properties of the bottom lands and the rounding portions of root of the gear are greatly improved compared with conventional gears. Additionally, wear resistance of the tooth surfaces of the gear is increased. This prevents undesired pitting or spalling due to fatigue of tooth surfaces or so forth from occurring, providing a high quality and high strength gear.

## Claims

1. A method for producing a high strength gear, comprising the steps of:
providing a gear material having a given geometry; and
carburizing or carbo-nitriding said gear material,
**characterized in that**
said carburized or carbo-nitrified gear material is forged at a predetermined forming rate so that the effective hardening depth of bottom land and tooth root portions of said formed gear material is less than 80% of that of the tooth surface of the pitch circle.

2. A method according to claim 1, further comprising the step of immersing said forged gear in a neutral salt bath and the step of quenching it in an oil bath having a given temperature.

3. A method of producing a high strength gear, comprising the steps of:
providing a gear material having teeth of a given geometry; and
carburizing or carbo-nitriding said gear material so as to provide an effective hardening depth to bottom land and root portions of the teeth of said gear material which is less than 80% of that of the tooth surface of the pitch circle,
**characterized in that**
chillers (3) are disposed within the spaces between the teeth formed in the gear material prior to the carburizing or carbo-nitriding step wherein said chillers (3) are manufactured from steel bars which are disposed so as to contact with the bottom land and respective rounded portions of the tooth roots and are fixedly connected to adjacent chillers (3).

4. A method according to claim 3, **characterized in that** the chillers (3) include a plurality of projections on surfaces thereof.

5. A method according to claim 3, **characterized in that** the steel bars include a plurality of grooves on surfaces thereof, respectively.

6. A method according to claim 3, **characterized in that** said fixed connection is effected by means of linkages.

## Patentansprüche

1. Verfahren zur Herstellung eines hochfesten Zahnrades, umfassend die folgenden Schritte:
Bereitstellen eines Zahnradmaterials mit einer gegebenen Geometrie und
Aufkohlen oder Carbonitrieren dieses Zahnradmaterials,
**dadurch gekennzeichnet**, daß
das aufgekohlte oder carbonitrierte Zahnradmaterial mit einer vorbestimmten Verformungsgeschwindigkeit geschmiedet wird, so daß die wirksame Einhärtetiefe des Lückengrundes und der Zahnrußbereiche dieses Zahnradmaterials weniger als 80 % des Wertes der Zahnoberfläche des Wälzkreises beträgt.

2. Verfahren nach Anspruch 1, des weiteren umfassend den Schritt des Eintauchens dieses geschmiedeten Zahnrades in ein Neutralsalzbad und den Schritt des Abschreckens desselben in einem Ölbad mit einer vorherbestimmten Temperatur.

3. Verfahren zur Herstellung eines hochfesten Zahnrades, umfassend die folgenden Schritte:
Bereitstellen eines Zahnradmaterials mit Zähnen einer gegebenen Geometrie und Aufkohlen oder Carbonitrieren dieses Zahnradmaterials, um so eine wirksame Einhärtetiefe des Lückengrundes und der Fußbereiche der Zähne dieses Zahnradmaterials bereitzustellen, welche weniger als 80 % des Wertes der Zahnoberfläche des Wälzkreises beträgt,
**dadurch gekennzeichnet**, daß
Kühlapparate (3) innerhalb der Zwischenräume zwischen den in dem Zahnmaterial ausgebildeten Zähnen angeordnet sind vor dem Aufkohlungs- oder Carbonitrierungsschritt, wobei diese Kühlapparate (3) aus Stahlbarren hergestellt werden, welche angeordnet sind, um den Lückengrund und die jeweiligen abgerundete Bereiche der Zahnfüße zu berühren, und sind mit benachbarten Kühlapparaten (3) fest verbunden.

4. Verfahren nach Anspruch 3, **dadurch gekennzeichnet**, daß die Kühlapparate (3) eine Vielzahl von Vorsprünge auf deren Oberflächen aufweisen.

5. Verfahren nach Anspruch 3, **dadurch gekennzeichnet**, daß die Stahlbarren eine Vielzahl von Ausnehmungen auf deren Oberflächen umfassen.

6. Verfahren nach Anspruch 3, **dadurch gekennzeichnet**, daß diese feste Verbindung durch Verbindungen bewirkt wird.

## Revendications

1. Procédé pour fabriquer un engrenage à haute résistance, comprenant les étapes consistant à :
fournir un matériau d'engrenage possédant une géométrie donnée; et
carburer ou carbo-nitrurer ledit matériau d'engrenage,
caractérisé en ce que
ledit matériau d'engrenage carburé au carbo-nitruré est forgé à une vitesse de formage prédéterminée de façon que la profondeur effective de durcissement de la zone de fond et des portions de racine de dent dudit matériau d'engrenage formé est inférieure à 80% à celle de la surface de dent du cercle de pas.

2. Procédé selon la revendication 1, comprenant en outre l'étape consistant à immerger ledit engrenage forgé dans un bain de sel neutre et l'étape consistant à le tremper dans un bain d'huile possédant une température donnée.

3. Procédé pour fabriquer un engrenage à haute résistance, comprenant les étapes consistant à :
fournir un matériau d'engrenage possédant des dents d'une géométrie donnée; et
carburer ou carbo-nitrurer ledit matériau d'engrenage de façon à réaliser une profondeur efficace de durcissement à la zone de fond et des portions de racine des dents dudit matériau d'engrenage qui est inférieure à 80% à celle de la surface des dents du cercle de pas,
caractérisé en ce que
des éléments refroidisseurs (3) sont disposés à l'intérieur des espaces entre les dents formées dans le matériau d'engrenage avant l'étape consistant à carburer ou à carbo-nitrurer, pendant laquelle lesdits éléments de refroidissement (3) sont fabriqués à partir de barres en acier cui sont disposées de façon à venir en contact avec les zones de fond et des portions arrondies respectives des racines de dent et qui sont connectées fixement aux éléments de refroidissement adjacents (3).

4. Procédé selon la revendication 3, caractérisé en ce que les éléments de refroidissement (3) comprennent une pluralité de saillies sur leurs surfaces.

5. Procédé selon la revendication 3, caractérisé en ce que les barres en acier comprennent une pluralité de rainures sur leurs surfaces, respectivement.

6. Procédé selon la revendication 3, caractérisé en ce que ladite connexion fixe est effectuée au moyen d'éléments de liaison.
